# EUROPÄISCHE PATENTSCHRIFT

(11) **EP 2 595 522 B1**
(45) Veröffentlichungstag und Bekanntmachung des Hinweises auf die Patenterteilung: **09.11.2016**
(21) Anmeldenummer: 11731381.7
(22) Anmeldetag: 14.07.2011
(51) Int. Cl.: A47L 9/19

(54) **VERFAHREN UND VORRICHTUNG ZUR STEUERUNG DER LEISTUNG EINES GEBLÄSEMOTORS FÜR EINEN STAUBSAUGER**
METHOD AND APPARATUS FOR CONTROLLING THE PERFORMANCE OF A FAN MOTOR FOR A VACUUM CLEANER
PROCÉDÉ ET DISPOSITIF DE COMMANDE DE PERFORMANCE D'UN MOTEUR DE SOUFFLERIE POUR UN ASPIRATEUR

(30) Priorität: 20.07.2010 DE 102010031572
(43) Veröffentlichungstag der Anmeldung: 29.05.2013
(73) Patentinhaber: BSH Hausgeräte GmbH, 81739 München (DE)
(72) Erfinder: KASTNER, Julian, 97656 Oberelsbach (DE); FLEGLER, Alexander, 97616 Bad Neustadt (DE); KRAFT, Stefan, 36151 Burghaun (DE)
(86) Internationale Anmeldenummer: PCT/EP2011/062055
(87) Internationale Veröffentlichungsnummer: WO 2012/010493

(56) Entgegenhaltungen:
- DE-T2- 69 402 482
- DE-U1-202008 002 310
- JP-B2- 2 612 288

## Beschreibung

Die Erfindung betrifft ein Verfahren und Vorrichtungen zur Steuerung der Leistung eines Gebläsemotors für einen Staubsauger.

Ein allgemeines Ziel beim Betrieb von Staubsaugern ist es, eine möglichst hohe Energieeffizienz zu erreichen, das heißt bei möglichst niedriger Leistungsaufnahme eine bestmögliche Staub- und/oder Schmutzaufnahme zu erreichen. Bei Staubsaugern, welche mit einem Wechselfilterbeutel - häufig auch als Staubsaugerbeutel bezeichnet - betrieben werden, tritt jedoch der Effekt auf, dass sich die Poren des Wechselfilterbeutels mit zunehmendem Füllgrad des Wechselfilterbeutels immer mehr verschließen, so dass die Luftmenge welche bei gleichbleibender Leistung des Gebläsemotors pro Zeiteinheit eingesaugt werden kann, zunehmend verringert, was zu einer verminderten Staub- und/oder Schmutzaufnahme führt. Um diesen Effekt zu kompensieren ist es grundsätzlich bekannt, die Leistung des Gebläsemotors eines derartigen Staubsaugers mit zunehmendem Füllgrad des Wechselfilterbeutels zu erhöhen.

Die englischsprachige Zusammenfassung der Offenlegungsschrift JP 01236028 A offenbart einen Druckdifferenzdetektor zum Messen der Druckdifferenz vor und hinter einem Filter. Hierdurch sollen insbesondere die Verstopfung eines Ansaugstutzens von der Verstopfung des Filters unterschieden werden können, um das Gebläse eines Staubsaugers entsprechend zu steuern. Eine ähnliche Vorrichtung ist auch aus der englischsprachigen Zusammenfassung der Patentschrift JP 2612288B2 bekannt. Insbesondere wir in letzterer Schrift angeregt, die Drehzahl des Gebläses herabzusetzen, wenn die Druckdifferenz gering ist, und sie heraufzusetzen, wenn die Druckdifferenz groß ist.

Die Patentschrift EP 0 636 341 B1 und ihre deutsche Übersetzung DE 694 04 482 T2 offenbart einen Staubsauger mit einer Vorrichtung zum Erkennen des Bodens und zur Steuerung des Staubsaugermotors in Abhängigkeit von dem Messergebnis. In der Schrift wird angeregt, als Detektionsmittel zum Detektieren von Eigenschaften der Art des gereinigten Bodens einen Drucksensor einzusetzen, dessen Messpunkt am Eingang der Staub, angebracht ist. Um eine Beeinflussung der Detektion durch den Füllstand der Staubkammer zu kompensieren, ist weiterhin vorgeschlagen, mittels eines weiteren Drucksensors den Druckunterschied zwischen Ein- und Ausgang der Staubkammer zu messen. Der Messpunkt am Ausgang der Staubkammer ist entweder in der Staubkammer, vor einem Staubfilter oder zwischen dem Filter und der Ansaugseite des Gebläses angeordnet.

Aus der DE 10 2007 057 589 A1 ist eine Luft-Volumenstrom- und Schiebekraft-Regelungsvorrichtung für einen Staubsauger bekannt, der zumindest einen Motor, eine Staubaufnahmeeinrichtung und eine Saugdüse aufweist. Die Regelungsvorrichtung umfasst dabei eine Regelungseinrichtung zur Regelung der Motorleistung, einen ersten Sensor zur Erfassung des Luft-Volumenstroms, der zusammen mit der Regelungseinrichtung einen ersten Regelkreis bildet, um auf der Basis des Signals des ersten Sensors den Luft-Volumenstrom auf einem vorgegebenen Luft-Volumenstrom-Wert zu halten, einen zweiten Sensor zur Erfassung einer zum Schieben der Saugdüse erforderlichen Schiebekraft, der zusammen mit der Regelungseinrichtung einen zweiten Regelkreis bildet, um auf der Basis des Signals des zweiten Sensors die Schiebekraft unterhalb eines vorgegebenen Werts zu halten, sowie eine Regelkreis-Auswahleinrichtung, die abhängig von den Signalen der beiden Sensoren einen der beiden Regelkreise aktiviert. Die Erfassung des Luft-Volumenstroms erfolgt dabei über die Messung des Drucks zwischen einer Staubbeutelaufnahmeeinrichtung (Staubraum) und dem Gebläsemotor. Da der Druck in einer festen Beziehung zum Luft-Volumenstrom steht, kann über diese Messung auf den Luft-Volumenstrom geschlossen werden. Verändert sich dieser Druck, geht die Regelung davon aus, dass sich der Staubbeutel gefüllt hat und erhöht als Reaktion darauf die Motorleistung des Gebläsemotors, um den Luft-Volumenstrom konstant zu halten.

Nachteilig an dieser Lösung ist aber, dass lediglich der absolute Unterdruck hinter dem Staubsaugerbeutel gemessen wird und somit die Druckänderung und die damit verbundene Anpassung der Motorleistung nur an einen einzigen vordefinierten Bodenbelag (Teppichboden, Hartboden) oder an eine Situation, wenn eine Bodendüse des Staubsaugers in die Luft gehalten wird, angepasst werden kann. Abhängig vom jeweiligen Bodenbelag, auf welchem der Staubsauger betrieben wird, das heißt über welchen die Bodendüse geführt wird, dichtet die Bodendüse aber unterschiedlich stark ab, was zu einer Veränderung des absoluten Unterdruckes hinter dem Staubsaugerbeutel führt. So kann es dazu kommen, dass die Steuereinheit oder Steuerelektronik für den Gebläsemotor die Leistung des Gebläsemotors bei relativ dichten Bodenbelägen, wie, z.B. Teppichböden, so weit nachregelt, dass der Gebläsemotor letztendlich auf maximaler Leistung läuft, obwohl das aufgrund eines aktuellen Füllgrades des Staubsaugerbeutels gar nicht erforderlich wäre. Abhängig vom jeweiligen Bodenbelag, auf welchem der Staubsauger betrieben wird, ergeben sich somit Betriebssituationen mit deutlich reduzierter Energieeffizienz.

Im Übrigen wird ergänzend noch auf die DE 20 2008 002 310 U1 hingewiesen.

Der Erfindung liegt die Aufgabe zugrunde, eine Vorrichtung und ein Verfahren zur Steuerung der Leistung eines Gebläsemotors für einen Staubsauger mit Wechselfilterbeutel anzugeben, welche unabhängig vom Bodenbelag, auf welchem der Staubsauger betrieben wird, eine im Wesentlichen gleichbleibend hohe Energieeffizienz gewährleistet.

Diese Aufgabe wird erfindungsgemäß durch ein Verfahren gemäß des unabhängigen Anspruchs 1 und den Vorrichtungen gemäß der unabhängigen Ansprüche 2 und 4 gelöst.

Dementsprechend wird bei einem erfindungsgemäßen Verfahren zur Steuerung der Leistung eines Gebläsemotors für einen Staubsauger, welcher einen in einem Staubraum angeordneten Wechselfilterbeutel aufweist, ein Differenzdruck zwischen einem in Saugstromrichtung vor dem Wechselfilterbeutel liegenden ersten Bereich und einem in Saugstromrichtung nach dem Wechselfilterbeutel liegenden zweiten Bereich erfasst und die Leistung des Gebläsemotors in Abhängigkeit von dem erfassten Differenzdruck eingestellt.

Demgemäß umfasst eine erfindungsgemäße Vorrichtung zur Durchführung des vorgenannten Verfahrens zur Steuerung der Leistung eines Gebläsemotors für einen Staubsauger, welcher einen in einem Staubraum angeordneten Wechselfilterbeutel aufweist, ein Drucksensorsystem zum Erfassen eines Differenzdruckes zwischen einem in Saugstrdmrichtung vor dem Wechselfilterbeutel liegenden ersten Bereich und einem in Saugstromrichtung nach dem Wechselfilterbeutel liegenden zweiten Bereich und eine Steuereinheit für den Gebläsemotor, welche die Leistung des Gebläsemotors in Abhängigkeit von dem erfassten Differenzdruck einstellt.

Analog zu dem im Stand der Technik als Maß für den Füllgrad des Wechselfilterbeutels verwendeten absoluten Unterdruck hinter dem Wechselfilterbeutel steigt auch der Differenzdruck zwischen dem in Saugstromrichtung vor dem Wechselfilterbeutel liegenden ersten Bereich, welcher z.B. im Bereich eines Ansaugstutzens des Staubsaugers liegen kann, und einem in Saugstromrichtung nach dem Wechselfilterbeutel liegenden zweiten Bereich, welcher z.B. im Bereich des Staubraumes liegen kann, an. Somit ist auch dieser Differenzdruck gut als Maß für den Füllgrad des Wechselfilterbeutels geeignet. Im Vergleich zum absoluten Unterdruck hinter dem Wechselfilterbeutel hat dieser Differenzdruck aber den Vorteil, dass er sich in Abhängigkeit vom Bodenbelag nur sehr geringfügig ändert, so dass die Leistung des Gebläsemotors zwar in gewünschter Weise in Abhängigkeit vom Füllgrad des Wechselfilterbeutels nicht aber in unerwünschter Weise in Abhängigkeit vom jeweiligen Bodenbelag ändert. Der Staubsauger kann auf diese Weise unabhängig vom Bodenbelag immer mit hoher Energieeffizienz betrieben werden.

Das Drucksensorsystem kann einen analogen Differenzdrucksensor umfassen, was den Vorteil bietet, dass ein einziger Sensor ausreicht, um den Differenzdruck zu erfassen.

Alternativ dazu kann das Drucksensorsystem aber auch zwei analoge Drucksensoren aufweisen, wobei ein erster Drucksensor einen ersten Unterdruck in dem ersten Bereich und ein zweiter Drucksensor einen zweiten Unterdruck in dem zweiten Bereich misst. Mit Hilfe einer Auswerteeinheit kann dann durch Differenzbildung der Differenzdruck zwischen dem ersten und dem zweiten Bereich ermittelt werden. Da der Wert des ersten Unterdrucks unmittelbar von der Abdichtung der Bodendüse auf dem jeweiligen Bodenbelag und damit vom Bodenbelag selbst abhängt, kann durch ein derartiges Sensorsystem der Bodenbelag, auf welchem der Staubsauger betrieben wird, abhängig von dem Unterdruck in dem ersten Bereich bestimmt werden. Dies bietet den Vorteil, dass bei der Einstellung der Leistung des Gebläsemotors neben dem Differenzdruck auch der jeweilige Bodenbelag berücksichtigt werden kann. Auf diese Weise können auch noch die zwar geringen, aber doch vorhandenen bodenbelagsabhängigen Veränderungen des Differenzdruckes kompensiert werden.

Die Einstellung der Leistung des Gebläsemotors in Abhängigkeit vom Differenzdruck und ggf. vom Bodenbelag wird dadurch realisiert, dass ein funktioneller Zusammenhang zwischen diesen Größen abgespeichert ist. Die jeweils einzustellende Leistung wird aus einer entsprechenden Kennlinie oder einem Kennfeld ausgelesen. Demgemäß ist ein Speicher für eine derartige Kennlinie oder ein derartiges Kennfeld vorgesehen.

Wird der Differenzdruck mit Hilfe eines Differenzdrucksensors gemessen, ist gemäß einer Ausführungsform der Erfindung zur Bestimmung der einzustellenden Leistung nur eine einzige gespeicherte Kennlinie vorgesehen. Dabei gibt die Kennlinie vorteilhaft eine einzustellende Leistung des Gebläsemotors in Abhängigkeit von einem mittleren Differenzdruck für mehrere verschiedene Bodenbeläge, auf welchen der Staubsauger betrieben werden kann, an. Durch Verwendung einer einzelnen Kennlinie werden Mehrdeutigkeiten eines erfassten Differenzdruckes sicher vermieden. Durch die Mittelwertbildung über mindestens zwei verschiedene, insbesondere hinsichtlich ihrer Dichtwirkung in Bezug auf die Bodendüse stark unterschiedliche Bodenbeläge wird für jeden Bodenbelag eine zufriedenstellende Energieeffizienz gewährleistet.

Eine noch höhere Energieeffizienz kann dann erreicht werden, wenn das Drucksensorsystem mindestens zwei analoge Drucksensoren umfasst und neben dem Differenzdruck auch noch der Bodenbelag bestimmt wird. In diesem Fall kann die einzustellende Leistung für den Gebläsemotor aus einem gespeicherten Kennfeld entnommen werden, in welchem für verschiedene Bodenbeläge individuelle Kennlinien hinterlegt sind.

Weitere Merkmale und Vorteile der Erfindung werden nachfolgend anhand von Ausführungsbeispielen mit Bezugnahme auf die beigefügten Figuren erläutert.

Es zeigen schematisch:
- Fig. 1: eine perspektivische Darstellung eines Staubsaugers;
- Fig. 2: ein Blockdiagramm einer ersten Ausführungsform der erfindungsgemäßen Steuerungsvorrichtung;
- Fig. 3: ein Blockdiagramm einer alternativen zweiten Ausführungsform der erfindungsgemäßen Steuerungsvorrichtung; und
- Fig. 4: ein Kennfeld, welches eine einzustellende Leistung des Gebläsemotors eines Staubsaugers in Abhängigkeit von einem Differenzdruck und einem Bodenbelag angibt.

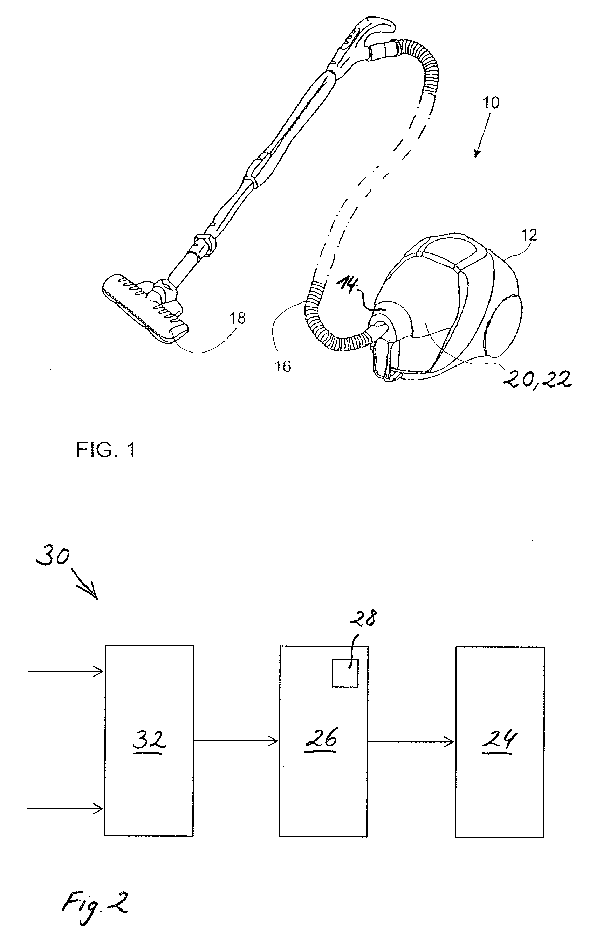

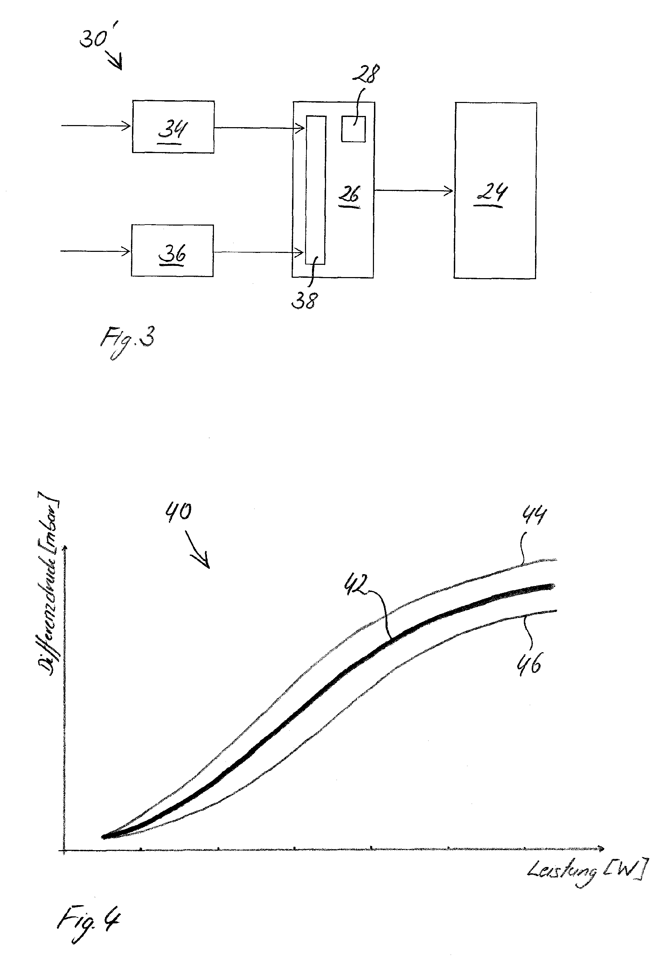

In Figur 1 ist ein Staubsauger, insbesondere ein Bodenstaubsauger, schematisch dargestellt und mit dem Bezugszeichen 10 gekennzeichnet. Der Bodenstaubsauger 10 weist ein Gehäuse 12 auf. Ein an der Frontseite des Staubsaugers 10 angeordneter Anschlussstutzen 14 ist am Gehäuse 2 befestigt. Am Anschlussstutzen 14 ist ein Saugschlauch 16 angeschlossen, der mit einer Bodendüse 18 verbunden ist, welche zum Reinigen einer Bodenfläche über diese geschoben wird. Im Gehäuse 2 befindet sich ein Staubraum 20, in welchem Wechselfilterbeutel 22, vorzugsweise ein Einweg-Filterbeutel, angeordnet ist. Darüber hinaus ist in dem Gehäuse 12 eine zur Regelung eines Gebläsemotors 24 (vgl. Fig. 2 und 3), insbesondere zur Regelung der Leistung des Gebläsemotors 24, erforderliche Steuereinheit oder Steuerelektronik 26 (vgl. Fig. 2 und 3) enthalten. Da der allgemeine Aufbau eines solchen Bodenstaubsaugers allgemein bekannt ist, wird darauf nicht weiter eingegangen.

Die vom Gebläsemotor 24 angesaugte Luft gelangt beim Saugen über die Bodendüse 18 und den Schlauch 16 in den Wechselfilterbeutel 22 , der die Staubund/oder Schmutzpartikel herausfiltert, passiert dann den Gebläsemotor 24 und gelangt über nicht dargestellte Auslassöffnungen wieder aus dem Staubsaugergehäuse 12 nach außen. Um das Saugergebnis konstant zu halten, ist es erforderlich, die durch einen zunehmenden Füllgrad des Wechselfilterbeutels 22 verursachte Abnahme der pro Zeiteinheit einsaugbaren Luftmenge durch entsprechende Erhöhung der Leistung des Gebläsemotors 24 zu kompensieren.

Dazu weist der Staubsauger 10 ein Drucksensorsystem 30, 30' (vgl. Fig. 2 und 3) zum Erfassen eines Differenzdruckes zwischen einem in Saugstromrichtung vor dem Wechselfilterbeutel 22 liegenden ersten Bereich, z.B. dem Bereich des Anschlussstutzens 14, und einem in Saugstromrichtung nach dem Wechselfilterbeutel 22 liegenden zweiten Bereich, z.B. dem Bereich des Staubraumes 20, umfasst. Der Differenzdruck stellt dabei ein vom jeweiligen Bodenbelag weitgehend unabhängiges Maß für den Füllgrad des Wechselfilterbeutels 22 dar, so dass der durch einen zunehmenden Füllgrad des Wechselfilterbeutels 22 bewirkte Saugleistungsverlust dadurch ausgeglichen werden kann, dass die Leistung des Gebläsemotors 24 in Abhängigkeit von dem erfassten Differenzdruck eingestellt wird.

Figur 2 zeigt ein schematisches Blockdiagramm einer ersten Ausführungsform der erfindungsgemäßen Steuerungsvorrichtung. Die Steuerungsvorrichtung umfasst das Drucksensorsystem 30, welches einen analogen Differenzdrucksensor 32 aufweist, der den Differenzdruck zwischen einem in Saugstromrichtung vor dem Wechselfilterbeutel 22 liegenden ersten Bereich und einem in Saugstromrichtung nach dem Wechselfilterbeutel 22 liegenden zweiten Bereich misst. Abhängig von dem gemessenen Differenzdruck stellt die Steuereinheit 26 die Leistung des Gebläsemotors 24 ein und zwar in der Form, dass mit zunehmendem Differenzdruck eine erhöhte Leistung eingestellt wird. Die jeweils einzustellende Leistung wird dabei aus einer Kennlinie 42 (vgl. Fig. 4) entnommen, welche in einem Speicher 28 gespeichert ist und einen funktionalen Zusammenhang zwischen dem gemessenen Differenzdruck und der einzustellenden Motorleistung repräsentiert. Der Speicher 28 ist dabei als Bestandteil der Steuereinheit 26 dargestellt, kann aber auch getrennt davon realisiert sein.

Figur 3 zeigt ein schematisches Blockdiagramm einer alternativen zweiten Ausführungsform der erfindungsgemäßen Steuerungsvorrichtung. Die Steuerungsvorrichtung umfasst das Drucksensorsystem 30', welches zwei analoge Drucksensoren 34 und 36 aufweist. Dabei misst ein erster Drucksensor 34 einen ersten Unterdruck in dem in Saugstromrichtung vor dem Wechselfilterbeutel 22 liegenden ersten Bereich und ein zweiter Drucksensor 36 einen zweiten Unterdruck in dem in Saugstromrichtung nach dem Wechselfilterbeutel 22 liegenden zweiten Bereich. Eine Auswerteeinheit 38, welche im dargestellten Ausführungsbeispiel in die Steuereinheit 26 integriert ist, aber auch außerhalb dieser realisiert sein kann, ermittelt dann durch Differenzbildung der beiden erfassten Unterdrücke den Differenzdruck. Außerdem ermittelt die Steuereinheit 26 in Abhängigkeit von dem ersten in Saugstromrichtung vor dem Wechselfilterbeutel 22 anliegenden Unterdruck den Bodenbelag, auf welchem der Staubsauger aktuell betrieben wird. Abhängig von dem ermittelten Differenzdruck sowie dem ermittelten Bodenbelag stellt die Steuereinheit 26 die Leistung des Gebläsemotors 24 ein. Die jeweils einzustellende Leistung wird dabei aus einem Kennfeld 40 entnommen, welches in dem Speicher 28 gespeichert ist.

Ein entsprechendes Kennfeld 40 ist in Figur 4 dargestellt. Es umfasst beispielhaft zwei Kennlinien 44 und 46, wobei die Kennlinie 44 für einen ersten Bodenbelag, z.B. Hartboden, und die zweite Kennlinie 46 für einen zweiten Bodenbelag, z.B. dichter Teppich, gültig ist. Die Steuereinheit 26 ermittelt die einzustellende Leistung für den Gebläsemotor 24 demgemäß anhand von Kennlinie 44, falls die Auswertung des ersten Unterdrucks auf den ersten Bodenbalg hindeutete, und anhand von Kennlinie 46 falls der zweite Bodenbelag detektiert wurde. Selbstverständlich kann das Kennfeld 40 auch mehr als zwei Kennlinien aufweisen, welche abhängig vom detektierten Bodenbelag zur Festlegung der Motorleistung genutzt werden.

In Figur 4 ist neben den Kennlinien 44 und 46, welche bei einer Steuerungsvorrichtung gemäß Fig. 3 genutzt werden, auch die Kennlinie 42 dargestellt, welche bei einer Steuerungsvorrichtung gemäß Fig. 2 genutzt wird. Für eine derartige Steuerungsvorrichtung ist es sinnvoll nur eine einzige Kennlinie 42 vorzusehen, da der jeweilige Bodenbelag nicht detektierbar ist. Diese Kennlinie 42 kann vorteilhaft durch Mittelwertbildung aus den Kennlinien von mindestens zwei unterschiedlichen Bodenbelägen, als z.B. aus den Kennlinien 44 und 46, erzeugt werden. Vorteilhaft werden dabei zumindest die Kennlinien für diejenigen Bodenbeläge berücksichtigt, welche den größten bzw. den kleinsten Differenzdruck bewirken.

### Verwendete Bezugszeichen:

- 10: Staubsauger
- 12: Gehäuse
- 14: Anschlussstutzen
- 16: Saugschlauch
- 18: Bodendüse
- 20: Staubraum
- 22: Wechselfilterbeutel
- 24: Gebläsemotor
- 26: Steuereinheit
- 28: Speicher
- 30, 30': Drucksensorsystem
- 32: Differenzdrucksensor
- 34,36: Drucksensor
- 38: Auswerteeinheit
- 40: Kennfeld
- 42, 44, 46: Kennlinie

## Patentansprüche

1. Verfahren zur Steuerung der Leistung eines Gebläsemotors (24) für einen Staubsauger (10), welcher einen in einem Staubraum (20) angeordneten Wechselfilterbeutel (22) aufweist, wobei
- ein Differenzdruck zwischen einem in Saugstromrichtung vor dem Wechselfilterbeutel (22) liegenden ersten Bereich und einem in Saugstromrichtung nach dem Wechselfilterbeutel (22) liegenden zweiten Bereich erfasst wird und
- die Leistung des Gebläsemotors (24) in Abhängigkeit von dem erfassten Differenzdruck eingestellt wird,
**dadurch gekennzeichnet,**
- **dass** der Differenzdruck mit Hilfe eines Differenzdrucksensors (32) gemessen wird und die einzustellende Leistung auf Basis eines funktionellen Zusammenhangs zwischen dem gemessenen Differenzdruck und einer einzustellenden Leistung bestimmt wird, wobei die einzustellende Leistung mit Hilfe einer gespeicherten Kennlinie (42) bestimmt wird, welche die einzustellende Leistung des Gebläsemotors (24) in Abhängigkeit von einem mittleren Differenzdruck für mindestens zwei verschiedene Bodenbeläge, auf welchen der Staubsauger (1) betrieben werden kann, angibt, oder
- **dass** durch einen ersten Drucksensor (34) ein erster Unterdruck in dem ersten Bereich und durch einen zweiten Drucksensor (36) ein zweiter Unterdruck in dem zweiten Bereich gemessen wird; abhängig von dem Unterdruck in dem ersten Bereich ein Bodenbelag, auf welchem der Staubsauger (10) betrieben wird, bestimmt wird; der Differenzdruck als Differenz zwischen dem ersten und dem zweiten Unterdruck ermittelt wird; und die Leistung des Gebläsemotors (24) in Abhängigkeit von dem bestimmten Differenzdruck und dem bestimmten Bodenbelag eingestellt wird; wobei die einzustellende Leistung mit Hilfe eines gespeicherten Kennfeldes (40) bestimmt wird.

2. Vorrichtung zur Steuerung der Leistung eines Gebläsemotors (24) für einen Staubsauger (10), welcher einen in einem Staubraum (20) angeordneten Wechselfilterbeutel (22) aufweist, umfassend
- ein Drucksensorsystem (30; 30') zum Erfassen eines Differenzdruckes zwischen einem in Saugstromrichtung vor dem Wechselfilterbeutel (22) liegenden ersten Bereich und einem in Saugstromrichtung nach dem Wechselfilterbeutel (22) liegenden zweiten Bereich und
- eine Steuereinheit (26) für den Gebläsemotor (24), welche die Leistung des Gebläsemotors (24) in Abhängigkeit von dem erfassten Differenzdruck einstellt, **dadurch gekennzeichnet, dass** die Steuereinheit (26) derart eingerichtet ist,
- dass der Differenzdruck mit Hilfe eines Differenzdrucksensors (32) gemessen wird und die einzustellende Leistung auf Basis eines funktionellen Zusammenhangs zwischen dem gemessenen Differenzdruck und einer einzustellenden Leistung bestimmt wird, wobei die einzustellende Leistung mit Hilfe einer gespeicherten Kennlinie (42) bestimmt wird, welche die einzustellende Leistung des Gebläsemotors (24) in Abhängigkeit von einem mittleren Differenzdruck für mindestens zwei verschiedene Bodenbeläge, auf welchen der Staubsauger (1) betrieben werden kann, angibt.

3. Vorrichtung nach Anspruch 2, **dadurch gekennzeichnet, dass** das Drucksensorsystem (30) mindestens einen analogen Differenzdrucksensor (32) umfasst und, dass der Differenzdruck mit Hilfe des mindestens einen analogen Differenzdrucksensors (32) gemessen wird.

4. Vorrichtung zur Steuerung der Leistung eines Gebläsemotors (24) für einen Staubsauger (10), welcher einen in einem Staubraum (20) angeordneten Wechselfilterbeutel (22) aufweist, umfassend
- ein Drucksensorsystem (30; 30') zum Erfassen eines Differenzdruckes zwischen einem in Saugstromrichtung vor dem Wechselfilterbeutel (22) liegenden ersten Bereich und einem in Saugstromrichtung nach dem Wechselfilterbeutel (22) liegenden zweiten Bereich und
- eine Steuereinheit (26) für den Gebläsemotor (24), welche die Leistung des Gebläsemotors (24) in Abhängigkeit von dem erfassten Differenzdruck einstellt, **dadurch gekennzeichnet, dass** die Steuereinheit (26) derart eingerichtet ist,
- dass durch einen ersten Drucksensor (34) ein erster Unterdruck in dem ersten Bereich und durch einen zweiten Drucksensor (36) ein zweiter Unterdruck in dem zweiten Bereich gemessen wird; abhängig von dem Unterdruck in dem ersten Bereich ein Bodenbelag, auf welchem der Staubsauger (10) betrieben wird, bestimmt wird; der Differenzdruck als Differenz zwischen dem ersten und dem zweiten Unterdruck ermittelt wird; und die Leistung des Gebläsemotors (24) in Abhängigkeit von dem bestimmten Differenzdruck und dem bestimmten Bodenbelag eingestellt wird; wobei die einzustellende Leistung mit Hilfe eines gespeicherten Kennfeldes (40) bestimmt wird.

5. Vorrichtung nach Anspruch 4, **dadurch gekennzeichnet, dass** das Drucksensorsystem (30') umfasst:
- mindestens zwei analoge Drucksensoren (34, 36) wobei ein erster analoger Drucksensor (34) denen ersten Unterdruck in dem ersten Bereich und ein zweiter analoger Drucksensor (36) den zweiten Unterdruck in dem zweiten Bereich misst, und
- eine Auswerteeinheit (38), welche den Differenzdruck als Differenz zwischen dem ersten und dem zweiten Unterdruck ermittelt.

6. Vorrichtung nach einem der Ansprüche 2 bis 5, **dadurch gekennzeichnet, dass** die Vorrichtung einen Speicher (28) umfasst, in welchem ein funktionaler Zusammenhang zwischen einem erfassten Differenzdruck und einer einzustellenden Leistung des Gebläsemotors (24), in Form einer Kennlinie (42) oder eines Kennfeldes (40), gespeichert ist.

7. Vorrichtung nach einem der vorhergehenden Ansprüche 2 bis 6, **dadurch gekennzeichnet, dass** der erste Bereich im Bereich eines Ansaugstutzens (14) des Staubsaugers (10) und der zweite Bereich im Bereich eines Ansaugstutzens (14) des Staubsaugers (10) und der zweite Bereich im Bereich des Staubraumes (20) liegt.

## Claims

1. Method for controlling the performance of a fan motor (24) for a vacuum cleaner (10) which has a replaceable filter bag (22) arranged in a dust chamber (20), wherein
- a differential pressure between a first region lying in the vacuum flow direction upstream of the replaceable filter bag (22) and a second region lying in the vacuum flow direction downstream of the replaceable filter bag (22) is detected and
- the performance of the fan motor (24) is adjusted as a function of the detected differential pressure,
**characterised in that**
- the differential pressure is measured with the aid of a differential pressure sensor (32) and the performance to be adjusted is determined based on a functional relationship between the measured differential pressure and a performance to be adjusted, wherein the performance to be adjusted is determined with the aid of a stored characteristic curve (42) which indicates the performance to be adjusted of the fan motor (24) as a function of an average differential pressure for at least two different floor coverings on which the vacuum cleaner (1) can be operated, or
- a first negative pressure in the first region is measured by a first pressure sensor (34) and a second negative pressure in the second region is measured by a second pressure sensor (36); as a function of the negative pressure in the first region a floor covering on which the vacuum cleaner (10) is being operated is determined; the differential pressure is determined as a difference between the first and the second negative pressure; and the performance of the fan motor (24) is adjusted as a function of the determined differential pressure and the determined floor covering; wherein the performance to be adjusted is determined with the aid of a stored characteristic curve (40).

2. Apparatus for controlling the performance of a fan motor (24) for a vacuum cleaner (10) which has a replaceable filter bag (22) arranged in a dust chamber (20), comprising
- a pressure sensor system (30; 30') for detecting a differential pressure between a first region lying in the vacuum flow direction upstream of the replaceable filter bag (22) and a second region lying in the vacuum flow direction downstream of the replaceable filter bag (22) and
- a control unit (26) for the fan motor (24) which adjusts the performance of the fan motor (24) as a function of the detected differential pressure, **characterised in that** the control unit (26) is designed such that
- the differential pressure is measured with the aid of a differential pressure sensor (32) and the performance to be adjusted is determined based on a functional relationship between the measured differential pressure and a performance to be adjusted, wherein the performance to be adjusted is determined with the aid of a stored characteristic curve (42) which indicates the performance to be adjusted of the fan motor (24) as a function of an average differential pressure for at least two different floor coverings on which the vacuum cleaner (1) can be operated.

3. Apparatus according to claim 2, **characterised in that** the pressure sensor system (30) comprises at least one analogue differential pressure sensor (32), and that the differential pressure is measured with the aid of the at least one analogue differential pressure sensor (32).

4. Apparatus for controlling the performance of a fan motor (24) for a vacuum cleaner (10) which has a replaceable filter bag (22) arranged in a dust chamber (20), comprising
- a pressure sensor system (30; 30') for detecting a differential pressure between a first region lying in the vacuum flow direction upstream of the replaceable filter bag (22) and a second region lying in the vacuum flow direction downstream of the replaceable filter bag (22) and
- a control unit (26) for the fan motor (24) which adjusts the performance of the fan motor (24) as a function of the detected differential pressure, **characterised in that** the control unit (26) is designed such that
- a first negative pressure in the first region is measured by a first pressure sensor (34) and a second negative pressure in the second region is measured by a second pressure sensor (36); as a function of the negative pressure in the first region a floor covering on which the vacuum cleaner (10) is being operated is determined; the differential pressure is determined as a difference between the first and the second negative pressure; and the performance of the fan motor (24) is adjusted as a function of the determined differential pressure and the determined floor covering; wherein the performance to be adjusted is determined with the aid of a stored characteristic curve (40).

5. Apparatus according to claim 4, **characterised in that** the pressure sensor system (30') comprises:
- at least two analogue pressure sensors (34, 36), wherein a first analogue pressure sensor (34) measures the first negative pressure in the first region and a second analogue pressure sensor (36) measures the second negative pressure in the second region, and
- an evaluation unit (38) which determines the differential pressure as a difference between the first and the second negative pressure.

6. Apparatus according to one of claims 2 to 5, **characterised in that** the apparatus comprises a memory (28) in which a functional relationship between a detected differential pressure and a performance to be adjusted of the fan motor (24) is stored in the form of a characteristic curve (42) or a characteristic field (40).

7. Apparatus according to one of the preceding claims 2 to 6, **characterised in that** the first region lies in the region of an intake (14) of the vacuum cleaner (10) and the second region lies in the region of an intake (14) of the vacuum cleaner (10) and the second region lies in the region of the dust chamber (20).

## Revendications

1. Procédé de commande de la puissance d'un moteur de ventilateur (24) pour un aspirateur (10) qui présente un sac de filtre interchangeable (22) disposé dans un espace à poussière (20),
- une pression différentielle entre une première zone située en amont du sac de filtre interchangeable (22) dans le sens du flux d'aspiration et une deuxième zone située en aval du sac de filtre interchangeable (22) dans le sens du flux d'aspiration étant enregistrée et
- la puissance du moteur de ventilateur (24) étant réglée en fonction de la pression différentielle enregistrée,
**caractérisé**
- **en ce que** la pression différentielle est mesurée à l'aide d'un capteur de pression différentielle (32) et en ce que la puissance à régler est déterminée sur la base d'un rapport fonctionnel entre la pression différentielle mesurée et une puissance à régler, la puissance à régler étant déterminée à l'aide d'une courbe caractéristique (42) mémorisée, laquelle indique la puissance à régler du moteur de ventilateur (24) en fonction d'une pression différentielle moyenne pour au moins deux revêtements de sol différents, sur lesquels l'aspirateur (1) peut être mis en fonction,
ou
- **en ce qu'**une première sous-pression est mesurée dans la première zone par un premier capteur de pression (34) et en ce qu'une deuxième sous-pression est mesurée dans la deuxième zone par un deuxième capteur de pression (36) ; en ce qu'en fonction de la sous-pression dans la première zone, un revêtement de sol, sur lequel l'aspirateur (10) est mis en fonction, est déterminé ; en ce que la pression différentielle est déterminée en tant que différence entre la première et la deuxième sous-pressions ; et en ce que la puissance du moteur de ventilateur (24) est réglée en fonction de la pression différentielle déterminée et du revêtement de sol déterminé ; la puissance à régler étant déterminée à l'aide d'un champ caractéristique (40) mémorisé.

2. Dispositif de commande de la puissance d'un moteur de ventilateur (24) pour un aspirateur (10) qui présente un sac de filtre interchangeable (22) disposé dans un espace à poussière (20), comprenant
- un système de capteurs de pression (30 ; 30') destiné à enregistrer une pression différentielle entre une première zone située en amont du sac de filtre interchangeable (22) dans le sens du flux d'aspiration et une deuxième zone située en aval du sac de filtre interchangeable (22) dans le sens du flux d'aspiration, et
- une unité de commande (26) pour le moteur de ventilateur (24), laquelle règle la puissance du moteur de ventilateur (24) en fonction de la pression différentielle enregistrée, **caractérisé en ce que** l'unité de commande (26) est configurée de manière à ce
- que la pression différentielle soit mesurée à l'aide d'un capteur de pression différentielle (32) et que la puissance à régler soit déterminée sur la base d'un rapport fonctionnel entre la pression différentielle mesurée et une puissance à régler, la puissance à régler étant déterminée à l'aide d'une courbe caractéristique (42) mémorisée, laquelle indique la puissance à régler du moteur de ventilateur (24) en fonction d'une pression différentielle moyenne pour au moins deux revêtements de sol différents, sur lesquels l'aspirateur (1) peut être mis en fonction.

3. Dispositif selon la revendication 2, **caractérisé en ce que** le système de capteurs de pression (30) comprend au moins un capteur de pression différentielle (32) analogique, et **en ce que** la pression différentielle est mesurée à l'aide de l'au moins un capteur de pression différentielle (32) analogique.

4. Dispositif de commande de la puissance d'un moteur de ventilateur (24) pour un aspirateur (10) qui présente un sac de filtre interchangeable (22) disposé dans un espace à poussière (20), comprenant
- un système de capteurs de pression (30 ; 30') destiné à enregistrer une pression différentielle entre une première zone située en amont du sac de filtre interchangeable (22) dans le sens du flux d'aspiration et une deuxième zone située en aval du sac de filtre interchangeable (22) dans le sens du flux d'aspiration, et
- une unité de commande (26) pour le moteur de ventilateur (24), laquelle règle la puissance du moteur de ventilateur (24) en fonction de la pression différentielle enregistrée, **caractérisé en ce que** l'unité de commande (26) est configurée de manière à ce
- qu'une première sous-pression soit mesurée dans la première zone par un premier capteur de pression (34) et **en ce qu'**une deuxième sous-pression soit mesurée dans la deuxième zone par un deuxième capteur de pression (36) ; **en ce qu'**en fonction de la sous-pression dans la première zone, un revêtement de sol, sur lequel l'aspirateur (10) est mis en fonction, soit déterminé ; **en ce que** la pression différentielle soit déterminée en tant que différence entre la première et la deuxième sous-pressions ; et **en ce que** la puissance du moteur de ventilateur (24) soit réglée en fonction de la pression différentielle déterminée et du revêtement de sol déterminé ; la puissance à régler étant déterminée à l'aide d'un champ caractéristique (40) mémorisé.

5. Dispositif selon la revendication 4, **caractérisé en ce que** le système de capteurs de pression (30') comprend :
- au moins deux capteurs de pression (34, 36) analogiques, un premier capteur de pression (34) analogique mesurant la première sous-pression dans la première zone et un deuxième capteur de pression (36) analogique mesurant la deuxième sous-pression dans la deuxième zone, et
- une unité d'évaluation (38), laquelle détermine la pression différentielle en tant que différence entre la première et la deuxième sous-pressions.

6. Dispositif selon l'une quelconque des revendications 2 à 5, **caractérisé en ce que** le dispositif comprend une mémoire (28) dans laquelle un rapport fonctionnel entre la première pression différentielle enregistrée et une puissance à régler du moteur de ventilateur (24) est mémorisé sous forme d'une courbe caractéristique (42) ou d'un champ caractéristique (40).

7. Dispositif selon l'une quelconque des revendications précédentes 2 à 6, **caractérisé en ce que** la première zone est située dans la partie d'un embout d'aspiration (14) de l'aspirateur (10) et **en ce que** la deuxième zone est située dans la partie d'un embout d'aspiration (14) de l'aspirateur (10) et **en ce que** la deuxième zone est située dans la partie de l'espace à poussière (20).
